# EUROPEAN PATENT SPECIFICATION

(11) **EP 4 239 394 B1**
(45) Date of publication and mention of the grant of the patent: **12.11.2025**
(21) Application number: 22160073.7
(22) Date of filing: 03.03.2022
(51) Int. Cl.: G02B 27/01, B60K 35/00, G02B 27/00, B60K 35/23, B60K 35/40

(54) **AN APPARATUS FOR PROJECTING IMAGES TOWARDS A USER**
VORRICHTUNG ZUM PROJIZIEREN VON BILDERN AUF EINEN BENUTZER
APPAREIL POUR LA PROJECTION D'IMAGES VERS UN UTILISATEUR

(43) Date of publication of application: 06.09.2023
(73) Proprietor: Nokia Technologies Oy, 02610 Espoo (FI)
(72) Inventor: JÄRVENPÄÄ, Toni Johan, 37800 Akaa (FI); SALMIMAA, Marja Pauliina, 33610 Tampere (FI)
(74) Representative: Swindell & Pearson Limited

(56) References cited:
- WO-A1-2019/122521
- US-A1- 2018 239 147

## Description

### TECHNOLOGICAL FIELD

Embodiments of the present disclosure relate to an apparatus such as a light guide display that can be used to project images towards a user.

### BACKGROUND

A light guide display can be used to project images towards a user. However, the light guide display does not necessarily function well in bright ambient light because the ambient light can be reflected, as glare, from the light guide or other surfaces towards the user. It would be desirable to have a light guide display that operates better in bright ambient light.

### BRIEF SUMMARY

According to the invention defined in the independent claim there is provided an apparatus comprising:
at least one light reflector;
a light guide configured to provide a received image to a user and also to the at least one light reflector,
wherein the at least one light reflector is configured to reflect at least some of the image to the user;
a combiner configured to combine the image provided by the light guide and the reflected image provided by the light reflector, and to direct the image provided by the light guide and the reflected image provided by the light reflector towards the user; and
reflection control means for alternately enabling and disabling reflection of light from at least the at least one light reflector.

In some but not necessarily all examples, the light guide comprises in-coupling diffractive means for receiving input light defining the image and out-coupling diffractive means configured to out-couple light defining the image.

In some but not necessarily all examples, a diffraction element provides the out-coupling diffractive means.

In some but not necessarily all examples, the light guide is configured as an exit pupil expander and comprises:
in-coupling diffractive means configured to in-couple one or more input beams of light into the light guide, expanding means configured to expand the one or more input beams of light, and out-coupling diffractive means configured to out-couple the one or more expanded beams of light from the light guide.

In some but not necessarily all examples, the reflection control means for alternately enabling and disabling reflection of light from at least the at least one light reflector comprises polarization control means configured to alternately change a polarization state of light.

In some but not necessarily all examples, the reflection control means for alternately enabling and disabling reflection of light from at least the at least one light reflector comprises light transmission control means configured to alternately enable and disable a path for light to the at least one light reflector.

In some but not necessarily all examples, the reflection control means comprises a control element, and the light guide is positioned between the control element and the at least one light reflector, wherein the reflection control means is configured to control the control element to alternately enable and disable, at least partially, the transmission of light through the control element to the light guide and consequently the transmission of such light to the at least one light reflector.

In some but not necessarily all examples, the reflection control means comprises a control element, positioned between the light guide and the at least one light reflector wherein the reflection control means is configured to control the control element to alternately enable and disable, at least partially, the transmission of light to the at least one light reflector.

In some but not necessarily all examples, the light guide and the at least one light reflector share a common optical aperture to the user.

In some but not necessarily all examples, the light guide and the at least one light reflector have different optical apertures to the user.

In some but not necessarily all examples, the apparatus comprises means for controlling at least an optical aperture of the at least one light reflector.

In some but not necessarily all examples, the at least one light reflector is a single mirror configured to reflect a whole of the image to the user.

In some but not necessarily all examples, the at least one light reflector is one of a plurality of mirrors that are controllable to, together, reflect a whole of the image to the user.

In some but not necessarily all examples, the apparatus comprises a light engine for providing the image, wherein the reflection control means is configured to alternately enable and disable reflection of light from at least the at least one light reflector in synchronization with a duty cycle of the light engine such that reflection of light from at least the at least one light reflector is disabled unless an image is being provided by the light engine.

In some but not necessarily all examples, the apparatus is comprised in a module, a device, a cab for a vehicle, a vehicle.

According to various, but not necessarily all, embodiments there is provided examples as claimed in the appended claims.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3A & FIG 3B shows another example of the subject matter described herein;
FIG. 4 shows another example of the subject matter described herein;
FIG. 5 shows another example of the subject matter described herein;
FIG. 6A shows another example of the subject matter described herein;
FIG. 6B shows another example of the subject matter described herein;
FIG. 7A & FIG 7B shows another example of the subject matter described herein;
FIG. 8A & FIG 8B shows another example of the subject matter described herein;
FIG. 9A & FIG 9B shows another example of the subject matter described herein;
FIG. 10A & FIG 10B shows another example of the subject matter described herein;
FIG. 11 shows another example of the subject matter described herein;
FIG. 12 shows another example of the subject matter described herein;
FIG. 13 shows another example of the subject matter described herein.

### DETAILED DESCRIPTION

The following figures illustrate examples of an apparatus 100 that is configured as a light guide 30 display. In some but not necessarily all examples, the apparatus 100 comprises a light guide 30 with optics for projection of an image 52. In some but not necessarily all examples, the light guide 30 is an exit pupil expander. An exit pupil expander uses optics to create a light guide display with a wide field of view and large exit pupil.

The apparatus 100 can be used for augmented reality. The apparatus 100 can be used as a head mounted display device or as a head-up display device. The apparatus 100, when configured as a head-up display device, can be housed in a vehicle or cab for a vehicle. Vehicles include trains, planes, automobiles, ships, spacecraft and other moving objects with a driver, pilot or human controller such as productivity vehicles, cranes. The apparatus 100, when configured as a head-up display device, can be housed in static workstations, tools and robots, and other windows or screens.

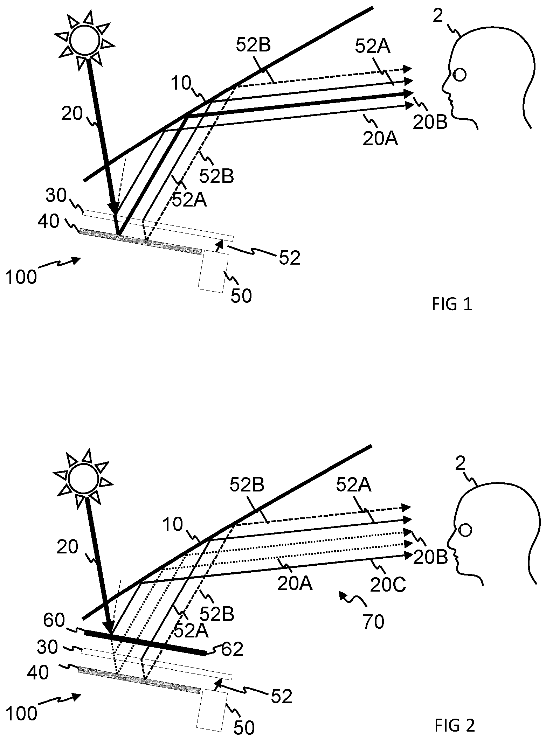

FIG 1 illustrates an example of an apparatus 100 comprising: a picture generation unit (PGU) 50, a light guide 30 and one or more reflectors 40.

The PGU 50 operates as a projector and projects an image 52 into the light guide 30. The light guide 30, in this example, provides the received image 52 to a user 2 and also to the light reflector 40. The At least one light reflector 40 is configured to reflect the image provided to it to the user 2.

In this example, the image 52A provided by the light guide 30 and the reflected image 52B provided by the light reflector 40 are combined at the combiner 10, which directs the images 52A, 52B towards the user 2 by reflection. In this example, the combiner 10 is a windshield. The reflectivity of the combiner 10 affects the efficiency of reflection. As an example, a windshield may reflect 20% of the light constructing the images 52A, 52B towards the user 2, while the rest is passed through the windshield and wasted. The reflectivity of the windshield can be improved with the windshield design and additional optical elements.

Ambient light 20 also reaches the light guide 30 and the light reflector 40. The ambient light 20 reflected from the light guide 30, the reflected ambient light 20A, and the ambient light 20 reflected from the light reflector 40, the reflected ambient light 20B, are combined at the combiner 10, which directs the reflected ambient light to the user 2. The glare caused by the reflected ambient light degrades the quality of the image 52 observed by the user 2.

The intention is to augment the image 52A with the reflected image 52B to create an improved virtual image 52 for the user 2. The added glare 20A, 20B caused by the light reflector 40 can reduce the quality of the virtual image much more than it is improved by the reflected image 52B.

The apparatus 100 illustrated in FIG 2 is similar to the apparatus illustrated in FIG 1. However, it additionally comprises reflection control means 60 for alternately enabling and disabling reflection of light from at least the at least one light reflector 40. The apparatus 100 achieves an increase in the brightness of the image 52 seen by the user 2 by reflecting an image 52 without a proportional increase in reflection of ambient light 20 to the user 2.

The apparatus 100 comprises:
at least one light reflector 40;
a light guide 30 configured to provide a received image 52 to a user 2 and also to the at least one light reflector 40, wherein the at least one light reflector 40 is configured to reflect at least some of the image to the user 2; and
reflection control means 60 for alternately enabling and disabling reflection of light from at least the at least one light reflector 40.

The enabling and disabling of reflection of light is 'relative' and not necessarily absolute. That is 'disabling' is intended to have the meaning of reduction, relative to enabling, with but one example of reduction being prevention (0% reflection). Also enabling does not necessarily imply 100% reflection.

The reflection control means 60 therefore alternates between a first state with increased reflection from at least the at least one light reflector 40 and a second state with decreased reflection from at least the at least one light reflector 40.

The reflection control means 60 is thus configured for alternately at least partially enabling and at least partially disabling reflection of light from at least the at least one light reflector 40.

The PGU 50 operates as a projector and projects an image 52 into the light guide 30. The light guide 30, in this example, provides the received image 52 to a user 2 (image 52A) and also to the light reflector 40. The at least one light reflector 40 is configured to reflect the image provided to it to the user 2 (image 52B).

It will be appreciated that the PGU 50 projects or produces light rays that 'encode' the image. A user sees the encoded image when the light rays reach the user's eye(s). The description of providing (or reflecting) an image can therefore be replaced with alternative phrasing such as "providing (or reflecting) light rays used for construction of an image" or "providing (or reflecting) image content" or "providing (or reflecting) light rays encoding an image" .

In this example, the image 52A provided by the light guide 30 and the reflected image 52B provided by the light reflector 40 are combined at the combiner 10, which directs the combined images 52A, 52B towards the user 2 using reflection to form a virtual image for the user 2. In this example, the combiner 10 is a windshield.

Ambient light 20 also reaches the light guide 30, the light reflector 40 and the reflection control means 60. The ambient light 20 reflected from the light guide 30, the reflected ambient light 20A; the ambient light 20 reflected from the light reflector 40, the reflected ambient light 20B; and the ambient light 20 (if any) reflected from the reflection control means 60, the reflected light 20C; are combined at the combiner 10, which directs the ambient light reflections 20 towards the user 2. Additional 2^{nd} or higher order reflections are not illustrated.

The PGU 50 projects the image 52 intermittently. There is a repeating pattern of first periods of time, when an image is projected, separated by second periods of time when an image 52 is not projected. The PGU 50 does not project any visible light into the light guide 30 during the second periods.

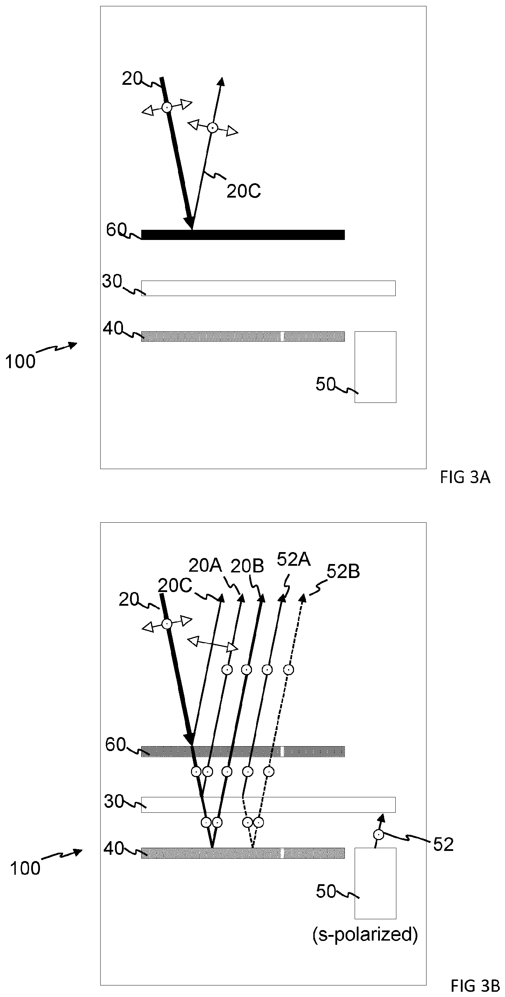

As illustrated in FIG 3A, the reflection control means 60 disables reflection of light from, at least, the light reflector 40 during the second periods of time so that less ambient light 20 is reflected to the user 2.

The reflection control means 60 can in some embodiments also disable reflection of light from the light guide 30 during the second periods of time so that less ambient light 20 is reflected to the user 2.

As illustrated in FIG 3B, the reflection control means 60 enables reflection of light from the light reflector 40 during the first periods of time so that the image 52 projected by the PGU 50 is reflected to the user 2 as reflected image 52B.

The quality of the image 52 observed by the user 2 is thus improved.

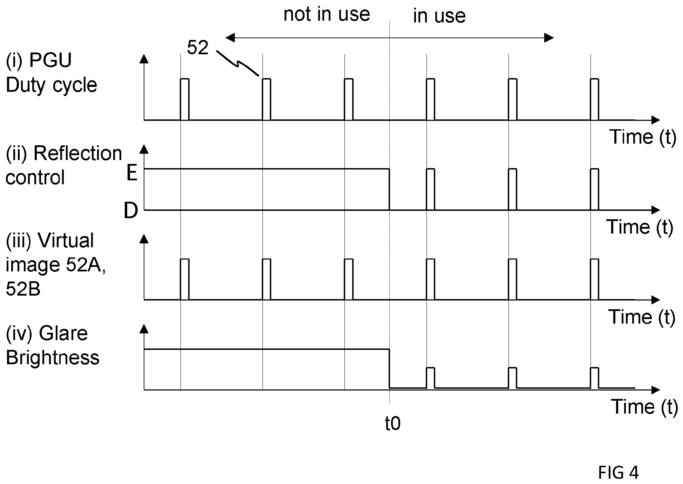

An example of the timing of enabling/disabling reflection by the reflection control means 60 is illustrated in FIG 4. FIG 4 illustrates, using a common time axis:
in sub-figure (i) a duty cycle of operation of the PGU 50,
in sub-figure (ii) an indication of whether reflection from light reflector 40 is enabled (E) or disabled (D),
in sub-figure (iii) an indication of the brightness of the combination of image 52A provided by the light guide 30 without using the light reflector 40 and the image 52B provided by the light guide 30 using the light reflector 40, and
in sub-figure (iv) an indication of the glare brightness, in this case, possibly produced by reflection of ambient light from the reflection control means 60, the light guide 30 and the light reflector 40.

The reflection control means 60 is not used before time t0. The reflection control means 60 is used after time t0 to intermittently enable and disable reflection of light from at least the light reflector 40.

In this example, the position of a control element 62 of the reflection control means 60 causes, intermittently, enabling reflection of light, including ambient light 20 and the provided image 52, from both the light reflector 40 and the light guide 30.

Before time t0, there is significant reflection (ii) and consequential glare (iv) which, over time, can be distracting for the user 2 and even significantly greater than the brightness of the combination of the virtual images 52A, 52B (iii).

After time t0, the enablement/disablement of reflection (ii) is synchronised with the duty cycle of the PGU 50 (i). The reflection control means 60 enables reflection when the PGU 50 is providing the image 52 and disables reflection when the PGU 50 is not providing the image 52.

During the periods of disablement (D) illustrated in FIG 4(ii), no virtual image 52 is provided by the PGU 50 (FIG 4(i)) or to the user 2 (FIG 4(iii)) and there is no light reflected from the light reflector 40 or from the light guide 30 (FIG 4(iv)).

During the periods of enablement (E) illustrated in FIG 4(ii), a virtual image 52 is provided by the PGU 50 (FIG 4(i)) via the light guide 30 to the user 2 (FIG 4(iii)) and there is light reflected from the light reflector 40 or from the light guide 30 (FIG 4(iv)). This reflected light includes not only reflected ambient light 20A, 20B but also the reflected image 52B.

Consequently, glare is significantly reduced and less distracting for the user 2 .

It will therefore be appreciated from the foregoing that in at least some examples, the apparatus 100 comprises a light engine, for example PGU 50, for providing the image 52, wherein the reflection control means 60 is configured to alternately enable and disable reflection of light from at least the at least one light reflector 40 in synchronization with a duty cycle of the light engine 50 such that reflection of light from at least the at least one light reflector 40 is disabled unless an image 52 is being provided by the light engine 50.

The duty cycle of the light engine, the PGU 50, can be 10% on and 90% off, for example.

Some micro displays used in a PGU 50 are field or color field sequential, where the display is illuminated part of the time, while the rest of the time is used for example for updating the content displayed on the display panel, e.g., switching between pixel on/off states. The illumination is typically LED or laser driven which is easy to set to be time sequential, no matter the display type.

In this example, LEDs are on 10% of the time (i.e., duty cycle of 10%). Field/frame rate can be set to very high so that motion or color artefacts are not observed, e.g., greater than 100 or 200 Hz or even over 700 Hz.

Due to the high refresh rate, the user 2 would not notice the individual peaks but rather an averaged brightness level, not shown in the illustration.

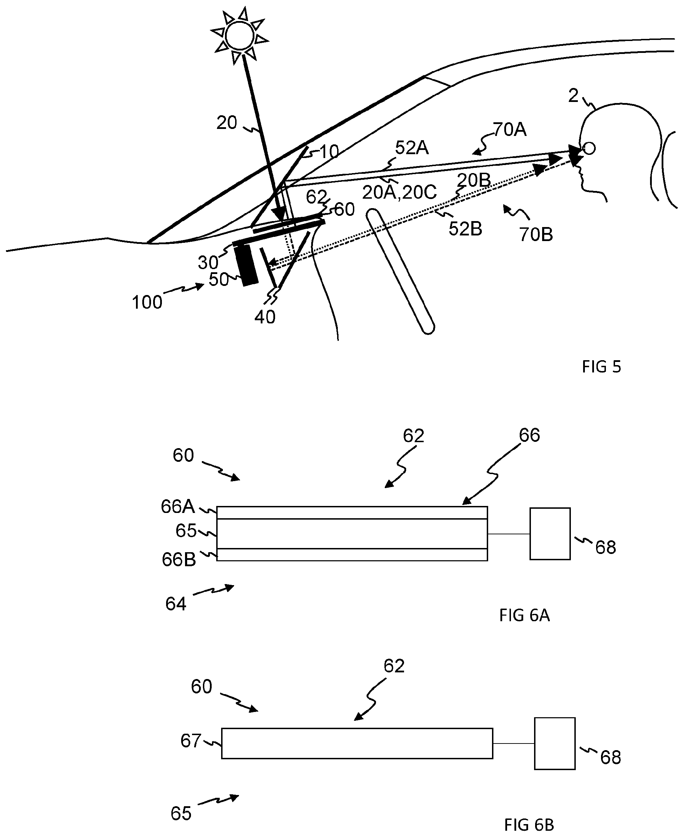

In the example illustrated in FIG 2 the light guide 30 and the light reflector 40 share a common optical aperture 70 to the user 2. The apparatus 100 can be used in different configurations and with different technologies as illustrated in FIG 5. In the example not covered by the claimed invention and illustrated in FIG 5, the light guide 30 and the at least one light reflector 40 have different optical apertures 70A, 70B to the user 2.

In this example, the image 52A provided by the light guide 30 is reflected off a semitransparent mirror or other reflective surface, which acts as a combiner 10, towards the user 2 via a first optical aperture 70A and the image 52B provided by the light guide 30 is reflected off a combination of light reflectors 40 towards the user 2 via a second optical aperture 70B.

The ambient light 20C reflected from the reflection control means 60 and the ambient light 20A reflected from the light guide 30 reach the user via the first optical aperture 70A. The ambient light 20A, 20C are illustrated using a single light ray in the FIG. The ambient light 20B reflected from the light reflectors 40 reach the user 2 via the second optical aperture 70B.

The reflection control means 60 can be implemented in different ways. For example, the reflection control means 60 can be electrically actuable to selectively control reflection of light. This can be achieved at the light reflector 40 or somewhere in the path to or from the light reflector 40.

In some examples, the reflection control means 60 can comprise a control element 62 that is electrically actuable to control reflection of light.

FIG 6A illustrates an example of a reflection control means 60 for alternately enabling and disabling reflection of light from at least the light reflector 40 (not illustrated) that comprises polarization control means 64 configured to alternately change a polarization state of light. The polarization control means 64 is a switchable polarizer that can be switched to either polarize the light that travels through it into one linear polarization state (s) or a different orthogonal polarization state (p).

In the example illustrated in FIG 6A, the polarization control means 64 comprises a control element 62. The control element 62 comprises a cross-polarization arrangement 66 comprising a first linear polarizer 66A having a first linear polarization state (s) and a second linear polarizer 66B having a second linear polarization state (p). An electrically controllable birefringent material 65 is used to selectively change the polarization of light between the first state (s) and the second state (p). An example of a suitable electrically controllable birefringent material 65 is nematic liquid crystal.

A controller 68 is configured to apply an electrical signal to change the state of the birefringent material 65.

Unpolarized light is polarized by the first linear polarizer 66A to have a first polarization state (s). If the birefringent material is in a first state, the polarized light reaches the second linear polarizer 66B unhanged in polarization state and cannot pass through the second linear polarizer 66B. This is the state that disables reflection. If the birefringent material is in a second state, the polarized light reaches the second linear polarizer 66B with a second polarization state (p) and can pass through the second linear polarizer 66B. This is the state that enables reflection.

Although the above description describes the most efficient enabled state, iln other examples, the light when it reaches the second linear polarizer 66B has a first component of the first polarization state (s) and a second component of the second polarization state (p) and only the second component can pass through the second linear polarizer 66B. This is the state that enables reflection. Therefore, by electrically controlling the state of the birefringent material 65 using the controller 68 the reflection control means 60 can enable reflection of light or disable reflection of light.

The control element 62 can for example be placed on the light guide 30.

The control element 62 has two states: passing light with only certain linear polarization (on state), or blocking/absorbing/reflecting both polarizations (off state) of the incident light.

The light guide 30 can be designed to outcouple a certain linear polarization only, which can be matched with the polarizer control element 62 (and, optionally, also optimized for reflection of the images from the windshield 10), so that there is practically no light loss in the polarizer control element 62.

Due to the short duty cycle (10%) of the PGU 50, the amount of ambient light 20 that passes through the polarizer control element 62, and which causes glare 20A from the light guide 30 and glare 20B from the light reflector 40, is very small, e.g. 5% of the amount of incident unpolarized light on the polarizer control element 62. The light reflector 40 increases/doubles the brightness of the virtual image by adding the reflected image 52B to the image 52A, but the amount of distracting glare 20A, 20B is controlled.

FIG 3A and 3B illustrate examples of the two states of the polarizer control element 62. FIG 3A illustrates the first (off) state, in which reflection of light 20 from the light reflector 40 is disabled. FIG 3B illustrates the second (on) state, in which reflection of light 20 from the light reflector 40 is enabled.

The incident light comprises both s- and p-polarizations.

In the first (off) state, the polarizer control element 62 reflects ambient light 20C comprising both polarizations. The polarizer control element 62 can be antireflection coated or treated with some other method to appear as close to matte black as possible, to minimize the amount of reflected light (i.e., the glare 20C).

In the second (on) state, the polarizer control element 62 passes s-polarized light and reflects p-polarized light. Only the p-polarized component of the ambient light 20C is reflected.

PGU 50 outputs light with s-polarization, which the light guide 30 passes through (with a certain efficiency), which then mostly passes through the polarizer control element 62 as image 52A and reflected image 52B and finally reflects optimally towards the user.

Glare 20A, 20B, 20C is now produced by all the optical layers of the apparatus 100. Only 50% of the unpolarized ambient light 20 passes through the polarizer element 62 and this happens only about 10% of the time, the amount of observed glare is reduced by 95%. This is illustrated in FIG 4 (iv).

FIG 6B illustrates an example of a reflection control means 60 for alternately enabling and disabling reflection of light from at least the light reflector 40 that comprises light transmission control means 65 configured to alternately enable and disable a path for light to the at least one light reflector 40.

A controller 68 is configured to apply an electrical signal to change the state of the transmission control means 65.

An example of light transmission control means 65 has already been described with reference to FIG 6A wherein the transmission control means comprises an electrically controllable birefringent material 65 between crossed linear polarizers 66A, 66B e.g., nematic liquid crystal

In other examples, the control element 62 of the reflection control means 60 control absorption of light. For example, the control element 62 can in some examples be a wideband electrically tunable light absorber 67. In some examples, a thin-film structure in conjunction with an ultrathin n-InSb film can be used as an active epsilon-near-zero layer in an optical Fabry-Perot nanocavity.

This control element 62 can also, in some examples, replace or operate as the light reflector 40. It is possible to transform the control element 62 using an electrical signal from being highly absorbing to being highly reflective.

In the preceding examples, the reflection control means 60 comprises a control element 62, and the light guide 30 is positioned between the control element 62 and the light reflector 40. The reflection control means 60 is configured to control the control element 62 to alternately enable and disable, at least partially, the transmission of light through the control element 62 to the light guide 30 and consequently the transmission of such light to the at least one light reflector 40.

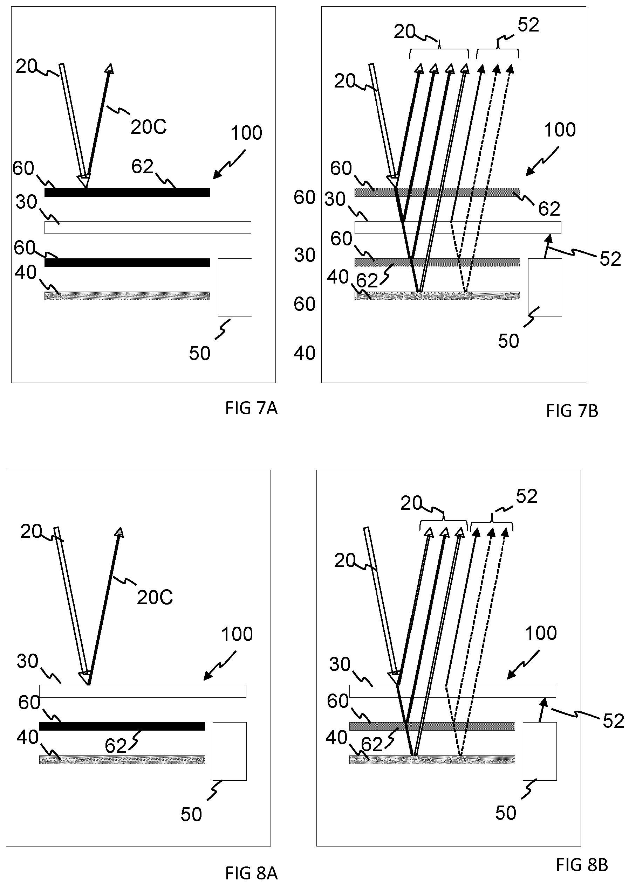

In other examples, for example as illustrated in FIGs 7A & 7B and FIGs 8A & 8B a control element 62, is additionally or alternatively positioned between the light guide 30 and the at least one light reflector 40. The reflection control means 60 is configured to control the control element 62 to alternately enable and disable, at least partially, the transmission of light to the at least one light reflector 40.

FIGs 7A and 7B are similar to respective FIGs 3A and 3B. However, in FIGs 7A and 7B the apparatus 100 comprises two control elements 62, and the light guide 30 is positioned between the two control elements 62. FIG 7A illustrates the first (off) state, in which reflection of light 20 from the light reflector 40 is disabled and FIG 7B illustrates the second (on) state, in which reflection of light 20 from the light reflector 40 is enabled. The two control elements 62 can, in at least some examples, be switched between the first (off) state and the second (on) state synchronously.

FIGs 8A and 8B are similar to respective FIGs 3A and 3B. However, in FIGs 8A and 8B the control element 62 is positioned between the light guide 30 and the light reflector 40. This setup does not reduce glare 20A produced by reflection of ambient light from the light guide 30, and some additional means could be used for that purpose, such as static polarizers or color filters.

In both FIGs 7A & 7B and FIGs 8A & 8B, the reflection control means 60 comprises a control element 62, positioned between the light guide 30 and the light reflector 40. The reflection control means 60 is configured to control the control element 62 to alternately enable and disable, at least partially, the transmission of light to the at least one light reflector 40.

In FIG 7A & 7B, the reflection control means 60 comprises a first control element 62 and a second control element 62, and the light guide 30 is positioned between the first control element 62 and the second control element 62, the second control element 62 being positioned between the light guide 30 and the at least one light reflector 40. In a first mode, the reflection control means 60 is configured to control the first control element 62 to alternately enable and disable, at least partially, the transmission of light through the control element 62 to the light guide 30. In a second mode the reflection control means 60 is configured to control the second control element 62 to alternately enable and disable, at least partially, the transmission of light to the at least one light reflector 40. In some examples, the first mode and second mode are different and non-overlapping. In some examples, the first mode and second mode are the same or are overlapping. Thus, in at least some examples, the reflection control means 60 is configured to control the first control element 62 to alternately enable and disable, at least partially, the transmission of light through the control element 62 to the light guide 30 and synchronously enable and disable, at least partially, the transmission of light from the light guide 30 to the at least one light reflector 40.

The control elements 62 can, in some examples, be electrically controllable polarization control elements. This improves polarization control.

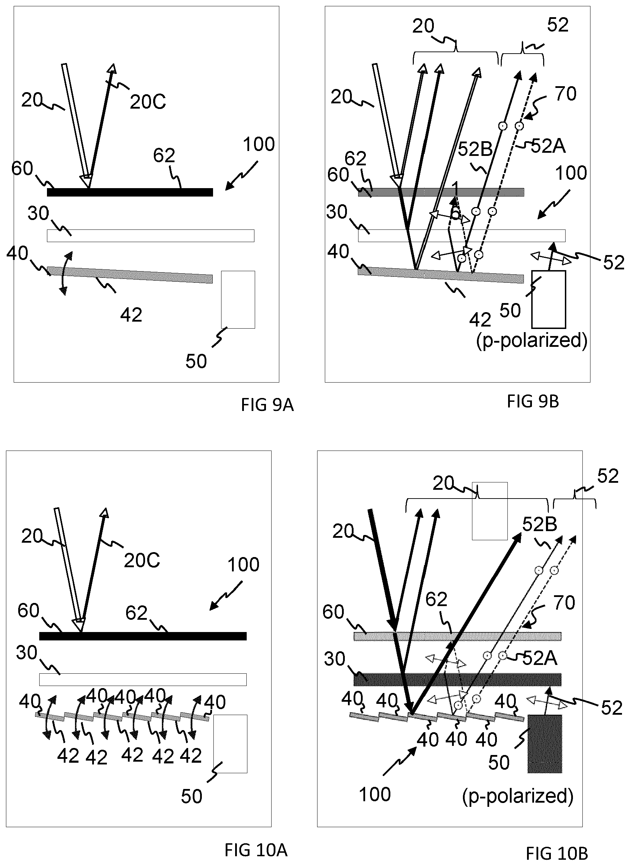

FIGs 9A and 9B are similar to respective FIGs 3A and 3B. However, in FIGs 9A and 9B the light reflector 40 is movable (e.g. tiltable). The apparatus 100 can be configured to control, electrically, movement of the light reflector 40. The controlled movement of the light reflector 40 can be used to control a position of an optical aperture 70 of the at least one light reflector 40.

In the previous examples, the light reflector 40 can be one or more mirrors. In FIG 9A & 9B, the light reflector 40 is a single mirror 42 configured to reflect a whole of the image to the user 2.

When the control element 62 is a polarization control element that, when enabled, allows the passage of s-polarized light, but reflects p-polarized light, and the PGU 50 introduces the image 52 as p-polarized light, then:
(i) the image 52A (p-polarization) is reflected by the polarization element 62, back through the light guide 30, to the light reflector 40, where it is reflected as s-polarized light which passes through the light guide 30 and the polarization element 62 to the user (not illustrated). The change of the polarization state (i.e. rotation of linear polarization by 90 degrees) can be enabled by a an additional ¼ wave retarder on top of the light reflector 40, or with some other comparable means, either integrated into the light reflector 40, or implemented as a separate optical component.
(ii) the image 52B (p-polarization) is incident on the light reflector 40, where it is reflected as s-polarized light which passes through the light guide 30 and the polarization control element 62 to the user (not illustrated).

The tilt angle of the light reflector 40 can be stationary, or adjustable to for example match a user's head position.

FIGs 10A and 10B are similar to respective FIGs 9A and 9B. However, in FIGs 9A and 9B, the apparatus 100 comprises a plurality of light reflectors 40. The apparatus 100 can be configured to control, electrically, movement of the plurality of the light reflectors 40. The light reflectors 40 can be controlled individually to have a particular position (tilt orientation) or controlled as a group so that that group of light reflectors 40 have a particular position (tilt orientation). The controlled movement of the light reflectors 40 can be used to control a position of an optical aperture 70 of the light reflectors 40.

Each of the plurality of light reflectors 40 can be a mirror 44 and each mirror 44 can be electrically controllable to, together, reflect a whole of the image to the user 2.

The example illustrated in FIGs 9A & 9B has a limited range for the tilt angles of the light reflector 40, as the volume of the setup quickly grows with large tilt angles. The example illustrated in FIGs 10A & 10B replaces the single reflecting surface with multiple smaller reflecting surfaces, each tiltable separately. This solution gives a larger range for the available tilt angles, without adding too much volume to the setup. The gaps between the plurality of light reflectors 40 (mirrors 42) are not easily visible as they are in different focal plane compared to the virtual image 52.

In FIGs 9B and 10B, the image 52B is reflected from the reflector(s) 40 to the user 2 as in previous examples. However, in FIGs 9B and 10B, the image 52A is also reflected from the reflector(s) 40 to the user 2, after being reflected by the polarization element 62.

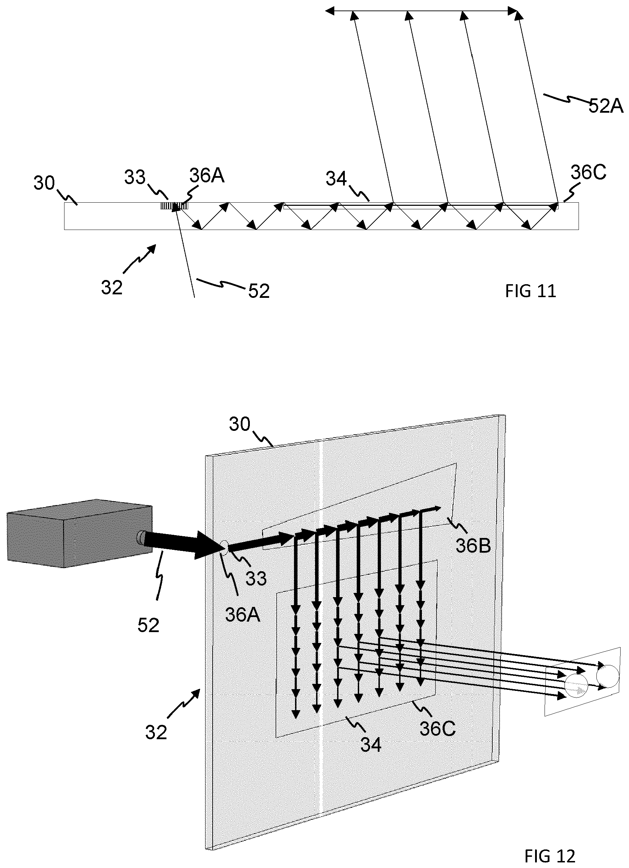

FIG 11 illustrates an example of a light guide 30. The light guide 30 in this example, but not necessarily all examples, comprises in-coupling diffractive means 33 for receiving input light defining the image 52 and out-coupling diffractive means 34 configured to out-couple light defining the image 52A and the image 52B (not illustrated).

In some examples, a diffraction element 36A is used to provide the in-coupling diffractive means 33 and a diffraction element 36C is used to provide the out-coupling diffractive means 34.

The light guide 30 can be configured as an exit pupil expander 32 with an increased number of acceptable viewing positions for a user 2.

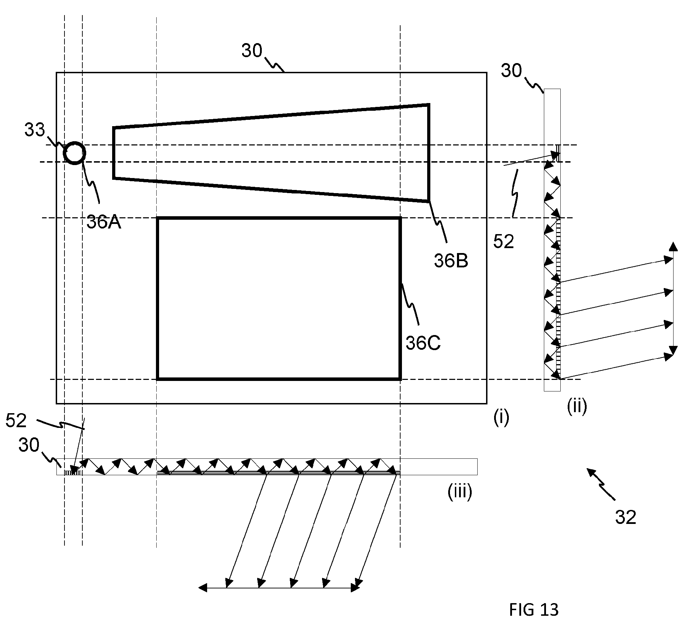

An example of a two-dimensional exit pupil expander is illustrated in FIG 12 (and FIG 13). FIG 12 is a perspective view. FIG 13 comprises three distinct views: (i) a top plan view, (ii) a first side view that defines a first dimension and (iii) a second side view that defines a second dimension.

The exit pupil expender 32 comprises in-coupling diffractive means 33 configured to in-couple one or more input beams of light into the light guide 30, expanding means 36B configured to expand the one or more input beams of light, and out-coupling diffractive means 34 configured to out-couple the one or more expanded beams of light from the light guide 30. A diffraction element 36A provides the in-coupling diffractive means 33 and a diffraction element 36C provides the out-coupling diffractive means 34. The expanding means can, in at least some examples, be a diffraction element.

Examples of diffraction elements include but are not limited to diffraction gratings and other periodic structures.

A pupil is a virtual aperture. The input pupil is expanded (increased, multiplied) to form the larger exit pupil. In the example illustrated the exit pupil is expanded in two different dimensions.

In general, 2D exit pupil expanders use diffractive optics. However, a 1D exit pupil expander can use refracting optics, with slanted mirror surfaces (or prisms) inside the light guide 30. 2D expansion with refractive optics is possible but more difficult.

### ALTERNATIVES

The light guide 30 could comprise a stack of multiple light guides, or partially overlapping light guides 30, or adjacent light guides 30. The term 'light guide' should be construed accordingly. In some examples, the light guide 30 is a single unitary light guide.

The reflecting surfaces described, for example, the surfaces of combiner 10, control element 62, light guide 30 and/or light reflector(s) 40 can be planar, 1D curved, 2D curved, spherically or aspherically curved, and may for example converge or diverge light beams upon the surface.

In at least some examples, the reflection control element 62 alternately enables and disables, at least partially, the transmission of ambient light to the at least one light reflector 40, and therefore the ambient glare or stray light for the user 2 is blocked or reduced.

Glare or stray light in the examples may be caused by reflections on different surfaces, unwanted diffractions (e.g., of higher order) on the diffraction gratings, or some other comparable causes. Additional means for reducing such effects could for example include anti-reflection coatings of different surfaces, and special diffraction grating solutions.

The reflection control means 60 enables reflection from the light reflector 40 when the PGU 50 is providing the image 52 and disables reflection when the PGU 50 is not providing the image 52. The control of the different elements needs to be synchronized, and there can be various delays, reaction times, settling times etc. between the different states.

The apparatus 100 can comprise additional optical elements that are not described such as, for example, Fresnel lenses for distorting the image from the light guide 30, additional lenses for compensating the distortion originating from the reflection of the windshield combiner 10.

The light reflector 40 can have a curved reflecting surface if for example a special grating solution or a curved light guide 30 was used for compensating the distortion caused by the curved windshield combiner 10.

The polarization directions, polarization on/off states, curvatures, angles of reflection, etc. in the examples are only examples and other suitable alternatives are possible. In one embodiment of the invention, the switchable polarizer 14 is located between the light guide 30 and the reflecting surface of the light reflector 40, in this case limiting only the unwanted ambient effects produced by the reflecting surface of the light reflector 40.

In another embodiment, the reflection control means 60 could be instead integrated into the light reflector 40, to enable reflection to take place only when the illumination of the PGU 50 is enabled. In other examples, the light reflector 40 is covered/removed/turned off if for example there is no need to increase the brightness of the virtual image 52A (by reflecting image 52B) but there is a high likelihood of creating distracting glare 20B from the light reflector 40. This could happen, for example, during the night when driving below street lights.

In some examples, to further reduce straylight, the reflection control means 60 additionally acts as a static or switchable bandpass filter, or separate bandpass or narrow band filters are employed.

In other examples, the apparatus 100 is configured to detect unwanted glare and/or ambient light sources and the control of the apparatus 100 and, in particular, the reflection control means 60 are dependent upon the detection.

In the above examples, an exit pupil expander (EPE) head-up display (HUD) can consist of a standard EPE solution based on a PGU projector 50 and a diffractive light guide 30 with incoupler 36A, expander 36B, and outcoupler 36C gratings. Other types of EPE layouts are equally possible.

The displayed virtual image can be focused to infinity (using a flat light guide 30), or to a finite distance (using e.g. a spherical light guide 30 or a flat light guide 30 with additional lenses), or have multiple focal planes (using e.g. a stack of spherical light guides 30). Only one light guide plate is shown in all the examples and it could be enough for achieving full colors, decent exit pupil / eyebox size, and eye relief / viewing distance from the EPE HUD system. Nonetheless, the examples are also compatible with solutions where multiple light guide plates are required for multiplexing the colors, the focal distance, the FOV, the exit pupil, or some other features.

The apparatus 100 can be placed under a glareshield as much as possible or be more exposed to environmental illumination.

Adjustment of the exit pupil position might be needed in order to compensate for individual user size and/or changing head position. The adjustment could be electromechanical, for example, tilting the light reflector(s) 40 or the PGU 50 or of some other adjustment type, automatic or manual, and could be synchronized with the HUD position, the seat position, the steering wheel position, or some other adjustment or user identification available in the vehicle.

The above-described apparatus 100 can be used as a head-mounted display (HMD) or as a head-up display (HUD).

The above-described apparatus 100 can be comprised in a module, a device, a vehicle or cab for a vehicle.

The blocks illustrated in the Figs may represent steps in a method and/or sections of code in the computer program. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

## Claims

1. An apparatus comprising:
at least one light reflector (40);
a light guide (30) configured to provide a received image (52) to a user and also to the at least one light reflector (40),
wherein the at least one light reflector (40) is configured to reflect at least some of the image to the user; and
reflection control means (60) for alternately enabling and disabling reflection of light from at least the at least one light reflector (40);
**characterised in** further comprising
a combiner (10) configured to combine the image (52A) provided by the light guide and the reflected image (52B) provided by the light reflector (40), and to direct the image (52A) provided by the light guide and the reflected image (52B) provided by the light reflector towards the user.

2. An apparatus as claimed in claim 1, wherein the light guide comprises in-coupling diffractive means for receiving input light defining the image and out-coupling diffractive means configured to out-couple light defining the image.

3. An apparatus as claimed in claim 2, wherein a diffraction element provides the out-coupling diffractive means.

4. An apparatus as claimed in any preceding claim wherein the light guide is configured as an exit pupil expander and comprises:
in-coupling diffractive means configured to in-couple one or more input beams of light into the light guide, expanding means configured to expand the one or more input beams of light, and out-coupling diffractive means configured to out-couple the one or more expanded beams of light from the light guide.

5. An apparatus as claimed in any preceding claim, wherein the reflection control means for alternately enabling and disabling reflection of light from at least the at least one light reflector comprises polarization control means configured to alternately change a polarization state of light.

6. An apparatus as claimed in any preceding claim, wherein the reflection control means for alternately enabling and disabling reflection of light from at least the at least one light reflector comprises light transmission control means configured to alternately enable and disable a path for light to the at least one light reflector.

7. An apparatus as claimed in any preceding claim, wherein the reflection control means comprises a control element, and the light guide is positioned between the control element and the at least one light reflector, wherein the reflection control means is configured to control the control element to alternately enable and disable, at least partially, the transmission of light through the control element to the light guide and consequently the transmission of such light to the at least one light reflector.

8. An apparatus as claimed in any preceding claim wherein the reflection control means comprises a control element, positioned between the light guide and the at least one light reflector wherein the reflection control means is configured to control the control element to alternately enable and disable, at least partially, the transmission of light to the at least one light reflector.

9. An apparatus as claimed in any preceding claim, wherein the light guide and the at least one light reflector share a common optical aperture to the user.

10. An apparatus as claimed in any preceding claim, wherein the light guide and the at least one light reflector have different optical apertures to the user.

11. An apparatus as claimed in any preceding claim, comprising means for controlling at least an optical aperture of the at least one light reflector.

12. An apparatus as claimed in any preceding claim, wherein the at least one light reflector is a single mirror configured to reflect a whole of the image to the user.

13. An apparatus as claimed in any of claims 1 to 11, wherein the at least one light reflector is one of a plurality of mirrors that are controllable to, together, reflect a whole of the image to the user.

14. An apparatus as claimed in any preceding claim, comprising a light engine for providing the image, wherein the reflection control means is configured to alternately enable and disable reflection of light from at least the at least one light reflector in synchronization with a duty cycle of the light engine such that reflection of light from at least the at least one light reflector is disabled unless an image is being provided by the light engine.

15. A module, a device, a cab for a vehicle, a vehicle comprising an apparatus as claimed in any preceding claim.

## Patentansprüche

1. Einrichtung, die Folgendes umfasst:
mindestens einen Lichtreflektor (40);
einen Lichtleiter (30), der dazu ausgelegt ist, ein empfangenes Bild (52) für einen Benutzer und für den mindestens einen Lichtreflektor (40) bereitzustellen,
wobei der mindestens eine Lichtreflektor (40) dazu ausgelegt ist, mindestens einiges des Bildes zum Benutzer zu reflektieren; und
Reflexionssteuermittel (60), zum abwechselndem Aktivieren und Deaktivieren der Reflexion von Licht von mindestens dem mindestens einen Lichtreflektor (40);
**dadurch gekennzeichnet ist, dass** sie ferner Folgendes umfasst
einen Kombinierer (10), der dazu ausgelegt ist, das vom Lichtleiter bereitgestellte Bild (52A) und das vom Lichtreflektor (40) bereitgestellte Bild (52B) zu kombinieren und das vom Lichtleiter bereitgestellte Bild (52A) und das vom Lichtreflektor bereitgestellte Bild (52B) auf den Benutzer zu richten.

2. Einrichtung nach Anspruch 1, wobei der Lichtleiter Einkopplungsbeugungsmittel zum Empfangen von Eingangslicht, das das Bild definiert, sowie Auskopplungsbeugungsmittel umfasst, die dazu ausgelegt sind, Licht, das das Bild definiert, auszukoppeln.

3. Einrichtung nach Anspruch 2, wobei ein Beugungselement die Auskopplungsbeugungsmittel bereitstellt.

4. Einrichtung nach einem der vorhergehenden Ansprüche, wobei der Lichtleiter als ein Austrittspupillenexpander ausgelegt ist und Folgendes umfasst:
Einkopplungsbeugungsmittel, die dazu ausgelegt sind, einen oder mehrere Lichteingangsstrahlen in den Lichtleiter einzukoppeln, Expansionsmittel, die dazu ausgelegt sind, den einen oder die mehreren Lichteingangsstrahlen zu expandieren, und Auskopplungsbeugungsmittel, die dazu ausgelegt sind, den einen oder die mehreren expandierten Strahlen von Licht vom Lichtleiter auszukoppeln.

5. Einrichtung nach einem der vorhergehenden Ansprüche, wobei die Reflexionssteuermittel zum abwechselnden Aktivieren und Deaktivieren der Reflexion von Licht von mindestens dem mindestens einen Lichtreflektor Polarisationssteuermittel umfasst, die dazu ausgelegt sind, einen Polarisationszustand von Licht abwechselnd zu ändern.

6. Einrichtung nach einem der vorhergehenden Ansprüche, wobei die Reflexionssteuermittel zum abwechselnden Aktivieren und Deaktivieren der Reflexion von Licht von mindestens dem mindestens einen Lichtreflektor Lichtübertragungssteuermittel umfasst, die dazu ausgelegt sind, einen Pfad für Licht zu dem mindestens einen Lichtreflektor abwechselnd zu aktivieren und zu deaktivieren.

7. Einrichtung nach einem der vorhergehenden Ansprüche, wobei die Reflexionssteuermittel ein Steuerelement umfassen und der Lichtleiter zwischen dem Steuerelement und dem mindestens einen Lichtreflektor positioniert ist, wobei die Reflexionssteuermittel dazu ausgelegt sind, das Steuerelement zum abwechselnden Aktivieren und Deaktivieren der Übertragung von Licht durch das Steuerelement zum Lichtleiter mindestens teilweise und folglich die Übertragung von derartigem Licht zu dem mindestens einen Lichtreflektor zu steuern.

8. Einrichtung nach einem der vorhergehenden Ansprüche, wobei die Reflexionssteuermittel ein Steuerelement umfassen, das zwischen dem Lichtleiter und dem mindestens einen Lichtreflektor positioniert ist, wobei die Reflexionssteuermittel dazu ausgelegt sind, das Steuerelement zum abwechselnden Aktivieren und Deaktivieren der Übertragung von Licht zu dem mindestens einen Lichtreflektor mindestens teilweise zu steuern.

9. Einrichtung nach einem der vorhergehenden Ansprüche, wobei der Lichtleiter und der mindestens eine Lichtreflektor eine gemeinsame optische Öffnung zum Benutzer gemeinsam verwenden.

10. Einrichtung nach einem der vorhergehenden Ansprüche, wobei der Lichtleiter und der mindestens eine Lichtreflektor verschiedene optische Öffnungen zum Benutzer aufweisen.

11. Einrichtung nach einem der vorhergehenden Ansprüche, die Mittel zum Steuern von mindestens einer optischen Öffnung des mindestens einen Lichtreflektors umfasst.

12. Einrichtung nach einem der vorhergehenden Ansprüche, wobei der mindestens eine Lichtreflektor ein einzelner Spiegel ist, der dazu ausgelegt ist, ein Ganzes des Bildes zum Benutzer zu reflektieren.

13. Einrichtung nach einem der Ansprüche 1 bis 11, wobei der mindestens eine Lichtreflektor einer von einer Vielzahl von Spiegeln ist, die steuerbar sind, um zusammen ein Ganzes des Bildes zum Benutzer zu reflektieren.

14. Einrichtung nach einem der vorhergehenden Ansprüche, die eine Lichtmaschine zum Bereitstellen des Bildes umfasst, wobei die Reflexionssteuermittel dazu ausgelegt sind, die Reflexion von Licht von mindestens dem mindestens einen Lichtreflektor synchron mit einem Arbeitszyklus der Lichtmaschine abwechselnd derart zu aktivieren und zu deaktivieren, dass eine Reflexion von Licht von mindestens dem mindestens einen Lichtreflektor deaktiviert wird, sofern kein Bild von der Lichtmaschine bereitgestellt wird.

15. Modul, Vorrichtung, Fahrerhaus für ein Fahrzeug, Fahrzeug, die eine Einrichtung nach einem der vorhergehenden Ansprüche umfassen.

## Revendications

1. Appareil comprenant :
au moins un réflecteur de lumière (40) ;
un guide de lumière (30) configuré pour fournir une image (52) reçue à un utilisateur de même qu'à l'au moins un réflecteur de lumière (40),
dans lequel l'au moins un réflecteur de lumière (40) est configuré pour réfléchir au moins une partie de l'image vers l'utilisateur ; et
des moyens de commande de réflexion (60) pour activer et désactiver alternativement la réflexion de la lumière provenant au moins de l'au moins un réflecteur de lumière (40) ;
**caractérisé en ce qu'**il comprend en outre
un combineur (10) configuré pour combiner l'image (52A) fournie par le guide de lumière et l'image réfléchie (52B) fournie par le réflecteur de lumière (40), et pour diriger l'image (52A) fournie par le guide de lumière et l'image réfléchie (52B) fournie par le réflecteur de lumière vers l'utilisateur.

2. Appareil selon la revendication 1, dans lequel le guide de lumière comprend des moyens de diffraction de couplage d'entrée pour recevoir une lumière d'entrée définissant l'image, et des moyens de diffraction de couplage de sortie configurés pour coupler en sortie une lumière définissant l'image.

3. Appareil selon la revendication 2, dans lequel un élément de diffraction fournit les moyens de diffraction de couplage de sortie.

4. Appareil selon l'une des revendications précédentes, dans lequel le guide de lumière est configuré comme un expanseur de pupille de sortie et comprend :
des moyens de diffraction de couplage d'entrée configurés pour coupler en entrée un ou plusieurs faisceaux lumineux d'entrée dans le guide de lumière, des moyens d'expansion configurés pour étendre les un ou plusieurs faisceaux lumineux d'entrée, et des moyens de diffraction de couplage de sortie configurés pour coupler en sortie les un ou plusieurs faisceaux lumineux étendus depuis le guide de lumière.

5. Appareil selon l'une des revendications précédentes, dans lequel les moyens de commande de réflexion pour activer et désactiver alternativement la réflexion de la lumière provenant au moins de l'au moins un réflecteur de lumière comprennent des moyens de commande de polarisation configurés pour modifier alternativement un état de polarisation de lumière.

6. Appareil selon l'une des revendications précédentes, dans lequel les moyens de commande de réflexion pour activer et désactiver alternativement la réflexion de la lumière provenant au moins de l'au moins un réflecteur de lumière comprennent des moyens de commande de transmission de lumière à l'au moins un réflecteur de lumière, configurés pour activer et désactiver alternativement un chemin pour la lumière.

7. Appareil selon l'une des revendications précédentes, dans lequel les moyens de commande de réflexion comprennent un élément de commande, et le guide de lumière est positionné entre l'élément de commande et l'au moins un réflecteur de lumière, dans lequel les moyens de commande de réflexion sont configurés pour commander l'élément de commande afin d'activer et de désactiver alternativement au moins partiellement la transmission de la lumière par l'élément de commande au guide de lumière et par conséquent la transmission de cette lumière à l'au moins un réflecteur de lumière.

8. Appareil selon l'une des revendications précédentes, dans lequel les moyens de commande de réflexion comprennent un élément de commande positionné entre le guide de lumière et l'au moins un réflecteur de lumière, dans lequel les moyens de commande de réflexion sont configurés pour commander l'élément de commande afin d'activer et de désactiver alternativement au moins partiellement la transmission de la lumière à l'au moins un réflecteur de lumière.

9. Appareil selon l'une des revendications précédentes, dans lequel le guide de lumière et l'au moins un réflecteur de lumière partagent une ouverture optique commune sur l'utilisateur.

10. Appareil selon l'une des revendications précédentes, dans lequel le guide de lumière et l'au moins un réflecteur de lumière ont des ouvertures optiques différentes sur l'utilisateur.

11. Appareil selon l'une des revendications précédentes, comprenant des moyens pour commander au moins une ouverture optique de l'au moins un réflecteur de lumière.

12. Appareil selon l'une des revendications précédentes, dans lequel l'au moins un réflecteur de lumière est un miroir unique configuré pour réfléchir l'image en entier vers l'utilisateur.

13. Appareil selon l'une des revendications 1 à 11, dans lequel l'au moins un réflecteur de lumière est l'un d'une pluralité de miroirs qui peuvent être commandés pour réfléchir ensemble l'image en entier vers l'utilisateur.

14. Appareil selon l'une des revendications précédentes, comprenant un moteur de lumière pour fournir l'image, dans lequel les moyens de commande de réflexion sont configurés pour activer et désactiver alternativement la réflexion de la lumière provenant au moins de l'au moins un réflecteur de lumière en synchronisation avec un rapport cyclique du moteur de lumière, de sorte que la réflexion de la lumière provenant au moins de l'au moins un réflecteur de lumière soit désactivée, à moins qu'une image ne soit fournie par le moteur de lumière.

15. Module, dispositif, cabine pour un véhicule, véhicule comprenant un appareil selon l'une des revendications précédentes.
